# EUROPEAN PATENT APPLICATION

(11) **EP 1 336 821 A2**
(43) Date of publication of application: **20.08.2003**
(21) Application number: 02029043.3
(22) Date of filing: 27.12.2002
(51) Int. Cl.: G01F 1/66

(54) **Ultrasound mass flow meter**

(30) Priority: 13.02.2002 SE 0200408
(71) Applicant: Siemens-Elema AB, 171 95 Solna (SE)
(72) Inventor: Lentelius, Annulla, 113 43 Stockholm (SE); Öhrnell, Jonas, 863 35 Sundsbruk (SE)

(57) **Abstract**

An ultrasound meter (2) comprising a transmitter (10), a receiver (14) and a control unit (12)for the transmitter (10) is disclosed. In order to improve measurements a feed-back connection (18) is disposed between the control unit (12) and the receiver (14) for a signal from the receiver (14) to the control unit (12) and the control unit (12) is adapted to regulate energy to the transmitter (10) in dependence of the signal fed back from the receiver (14) so that a constant output signal is obtained from the receiver (14).

## Description

The present invention concerns an ultrasound meter according to the preamble of Claim 1.

Ultrasound measurements are used for different purposes. For example to determine the flow rates of flowing media and to determine the compositions of gas mixtures, especially binary gas mixtures.

Variations in signal strength of the received signal is a problem that can arise with these uses. Typical causes of these variations are different degrees of acoustic damping with different gas compositions, as well as with different flows and pressures. The variations affects the signal-to-noise ratio and can lead to uncertainty in measurements.

One way to solve this problem is to vary the amplification of the received signal in dependence of its size. A large amplification can however result in an amplification of the noise.

An aim of the present invention is to at least partly solve this problem.

This aim is achieved according to the present invention by means of the ultrasound meter according to the preamble of Claim 1 being devised as is evident in the characterising portion of Claim 1.

Advantageous refinements and embodiments are set out in the claims dependent on Claim 1.

By means of regulating the energy supplied to the transmitter in dependence of the output signal of the receiver a constant output signal strength is obtained, with an optimal signal-to-noise ratio.

In an advantageous embodiment of the ultrasound meter the input voltage to the transmitter is varied in dependence of the output signal from the receiver in order to obtain a constant output signal.

In an alternative embodiment of the ultrasound meter the pulse width of the control pulses to the transmitter is varied in dependence of the output signal from the receiver so that a constant output signal is obtained.

The amplitude of the output signal can suitably be measured by determining the rise time for a flank of the output signal to reach a predetermined value. The rise time is then a measure of the strength of the output signal and may be used by the control unit to vary the energy to the transmitter.

The ultrasound meter according to the invention will now be described in more detail with reference to the figures.
FIG. 1 shows an embodiment of the ultrasound meter,
FIG. 2 shows a first way to regulate the energy to the transmitter, and
FIG. 3 shows a second way to regulate the energy to the transmitter.

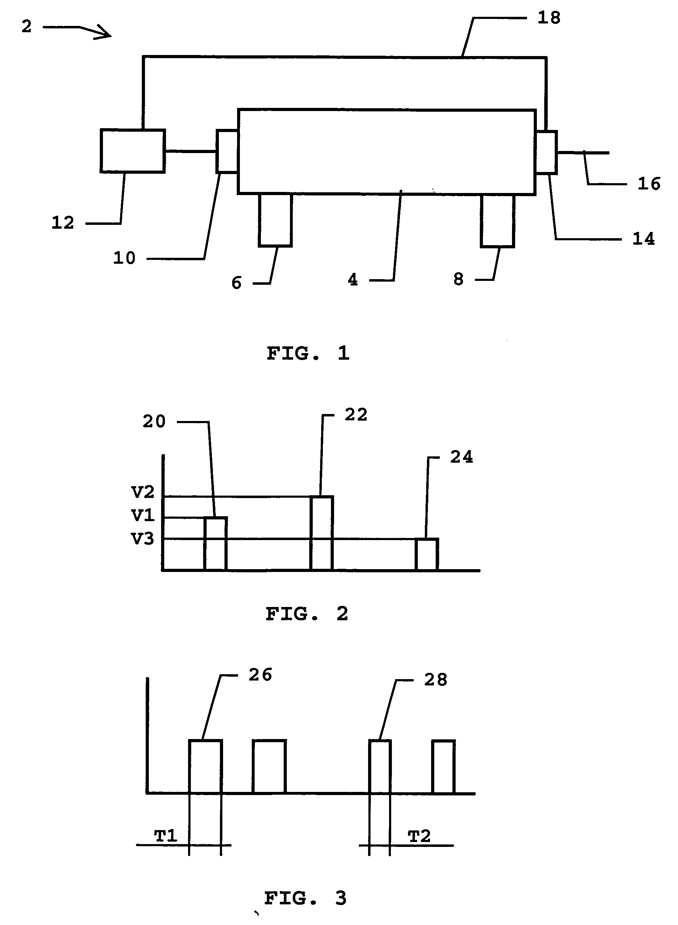

FIG. 1 shows an embodiment of an ultrasound meter 2 according to the invention. The ultrasound meter 2 comprises a measurement chamber 4 having an inlet 6 for gas and/or liquid and an outlet 8 for the gas and/or liquid. A transmitter 10 can send sound pulses into the measurement chamber 4 under control of a control unit 12. A receiver 14 detects the sound pulses and converts these to electrical signals which are output via an output line 16. A feed-back connection 18 from the receiver 14 to the control unit 12 means that the control unit 12 can regulate the energy to the transmitter 10 in relation to the sound pulses that are detected by the receiver 14 in order to maintain a constant signal strength of the electrical signals which are output via the output line 16.

FIG. 2 shows a design for how the control unit 12 of FIG. 1 can be operated to vary the energy to the transmitter 10. FIG. 2 shows a diagram with three energy pulses 20, 22, 24. All pulses 20, 22, 24 have the same pulse width. The first pulse 20 has an amplitude V1. The second pulse 22 has an amplitude V2 which is greater than V1. This is a consequence of the signal received by the receiver 14 being weaker than the constant value which was desired. The third pulse 24 has an amplitude V3 which is lower than V1. This is a consequence of the signal received by the receiver 14 being stronger than the constant value which was desired.

FIG. 3 shows an alternative design by which the energy to the transmitter 10 may be varied. A first pulse train 26, consisting of two identical pulses is shown. The pulse width is T1. In a second pulse train 28 the pulse width has been reduced to T2. The amplitude is identical for all pulses in both pulse trains 26, 28.

FIG. 2 and FIG. 3 show only exemplary designs for how the energy to the transmitter 10 can be varied using different pulse shapes. Several variations will be immediately apparent to the person skilled in the art. In principle any pulse and pulse train variation which causes a variation in the supplied energy is suitable.

The signal which is fed back via the feed-back connection 18 of FIG. 1 can consist of one (or more) of a number of different signals. It can consist of the raw signal that the receiver 14 detects, it can consist of an amplified raw signal, it can consist of the signal at the output 16, it can consist of a signal which represents one or more of the previous signals or their signal strengths. One way to determine signal strength is to determine a rise-time for a signal flank to reach a certain value. The rise-time can therefore constitute the fed back signal.

It is therefore sufficient that a signal representative of the signal strength at the receiver side or a signal from which the signal strength at the receiver side can be determined is fed back to the control unit 12. Whether the main part of the signal processing to determine the signal strength is carried out at the receiver side or in the control unit 12 is immaterial to the realisation of an ultrasound meter according to the invention.

Likewise the measurement chamber 4 can take on any known form. For example the measurement chamber 4 can be an integral part of a pipe or tube through which gas or liquid flows. Transmitters and receivers can thus be arranged at the pipe or tube wall in a known manner.

It is also immaterial whether the measurement is carried out in order to determine a flow, a gas composition, a temperature or other information determinable from the ultrasound measurement.

## Claims

1. An ultrasound meter (2) comprising a transmitter (10), a receiver (14) and a control unit (12)for the transmitter (10) **characterised by** a feed-back connection (18) for a signal from the receiver (14) to the control unit (12) and that the control unit (12) is adapted to regulate energy to the transmitter (10) in dependence of the signal fed back from the receiver (14) so that a constant output signal is obtained from the receiver (14).

2. An ultrasound meter according to Claim 1 **characterised in that** the control unit (12) is adapted to regulate the amplitude (V1, V2, V3) of a control pulse (20, 22, 24) to the transmitter (10) in dependence of the signal fed back from the receiver (14).

3. An ultrasound meter according to Claim 1 or Claim 2 **characterised in that** the control unit (12) is adapted to regulate the pulse width (T1, T2) of a control pulse (26, 28) to the transmitter (10) in dependence of the signal fed back from the receiver (14).

4. An ultrasound meter according to Claim 3 **characterised in that** the control pulse consists of a pulse train (26, 28).
